# EUROPEAN PATENT SPECIFICATION

(11) **EP 4 024 306 B1**
(45) Date of publication and mention of the grant of the patent: **29.11.2023**
(21) Application number: 22158921.1
(22) Date of filing: 27.02.2018
(51) Int. Cl.: G06Q 10/10, G06F 21/64

(54) **DIGITAL DOCUMENT EXECUTION**
AUSFÜHRUNG VON DIGITALEN DOKUMENTEN
EXÉCUTION DE DOCUMENTS NUMÉRIQUES

(30) Priority: 27.02.2017 GB 201703145
(43) Date of publication of application: 06.07.2022
(62) Divisional of application: 18715793.8
(73) Proprietor: Animation 2000 Limited, Iver Heath, Buckinghamshire SL10 0NH (GB)
(72) Inventor: SARGENT, Laurence, Iver Heath, SL10 0NH (GB); NOAKES, Neil, Iver Heath, SL10 0NH (GB); ERDEM, Kemal, Iver Heath, SL10 0NH (GB); KOVACS, Sebastien, Iver Heath, SL10 0NH (GB); BHARATH, Vaid, Iver Heath, SL10 0NH (GB)
(74) Representative: Horler, Philip John

(56) References cited:
- US-A1- 2008 097 777
- US-A1- 2011 264 995
- US-A1- 2015 178 252
- US-A1- 2015 213 404

## Description

### Technical field

The present disclosure relates to a method, electronic device and computer program for digitally executing a document.

### Background

Often, in order for a document to be executed, a number of different people must approve the contents of the document and/or sign the document. The document may not be treated as executed until all of the approvals and/or signatures have been received. For example, particular people within a company, each holding a different position and potentially having different levels of seniority, must review and approve and/or sign the document. One example of this may be where a new person is being employed by a company. The contract of employment may only be executed, and therefore come into effect, when it has been signed by the new employee, approved by a project manager at the company, approved by the finance director of the company, signed by the HR director of the company and signed by the CEO of the company.

Traditionally, the document would need to be delivered to each different person for approval and/or signature. Typically, the document may be communicated in turn to each person who needs to approve the content of the document (for example, approving the financial terms set out in the document, etc). This may involve communicating the document to the first person whose approval is required. Once the first person has approved the content of the document, it may then be communicated to the next person for approval, and so on until all people have approved the document. This may be referred to as an 'approval chain'. Once the approval chain has been completed, the document may then be communicated in turn to each person who needs to sign the document in order for it to be executed. This may involve communicating the document to a first person whose signature is required. Once the first person has signed the document, it may then be communicated to the next person to sign, and so on until all people have signed the document. This may be referred to as a 'signature chain'. Once the signature chain has been completed, the document is executed.

This can be a very time consuming process, particularly when a large number of people must approve and/or sign the document. Furthermore, it can be very inefficient in both cost and energy, particularly where a number of the people who must approve and/or sign the document are located in different geographical locations, since the document is often posted or couriered between the people. Furthermore, some people may be in both the approval chain and the signature chain, meaning that the document is communicated to them on two separate occasions, once for approval and then sometime later for signature, which even further adds to the inefficiency of the process.

Finally, the process can represent a security risk. Whilst the document is not executed until all signatures have been obtained, as the document builds up signatures, it gradually nears execution. This may cause the document to be wrongly treated as executed before all the necessary signatures are obtained. Furthermore, there is also a risk that if proper processes are not followed, the document may accrue all necessary signatures before it has received all of the necessary approvals, particularly in the case where approvals are not noted on the document itself (for example, because they are noted on a separate, accompanying document). Thus, a document may be executed before all of the necessary approvals are obtained.

US2011/264995A1 discloses the exchange of documents for execution using an automated system that routes and stores documents based on routing information. Routing may be accomplished with reminders for individuals of deadline for responding. After execution is confirmed, an executed copy may be forwarded to all parties and desired non-parties. If execution or approval is desired from a plurality of individuals, documents received from each of the plurality of individuals can be merged into a single, fully executed document if the approval/signatures are obtained simultaneously. Search capability for identifying data regarding the document, text within the document, or both may also be provided.

### Summary

The invention is defined by the appended claims.

In a first aspect of the present disclosure, there is provided a method of digitally executing a document(s) to be authorised by a plurality of entities, wherein there is a required authorisation (for example, an approval and/or signature) for each of the plurality of entities, the method comprising: digitally communicating to the plurality of entities a corresponding plurality of document authorisation requests, wherein: each of the plurality of document authorisation requests is digitally communicated to a respective one of the plurality of entities, and wherein each document authorisation request comprises the document(s) and a request for the required authorisation corresponding to the entity to which the document authorisation request is directed; and after receiving from each of the plurality of entities authorisation data complying with the respective requested authorisation (for example, authorisation data comprising an approval and/or signature, as per the required authorisation for that respective entity), generating an executed document comprising the document and at least some of the received authorisation data (for example, comprising any signature(s) received from the entities).

The plurality of entities may make up a sequential signature-approval chain, and wherein digitally communicating the plurality of document authorisation requests to the plurality of entities comprises: digitally communicating a document authorisation request to a first entity in the signature-approval chain; and sequentially digitally communicating a respective document approval communication to each remaining entity in the signature-approval chain in turn after receiving authorisation data from a previous entity in the signature-approval chain complying with the required authorisation for the previous entity.

Each of the signatures in the electronic document may comprises signature data based at least in part on at least one of: the time-date stamp indicative of the time and/or date on which the entity generated the authorisation data; the entity label indicative of the identity of the entity; and/or the entity location indicative of the location at which the entity generated the authorisation data.

Each of the signatures in the electronic document may comprise signature data based at least in part on at least one of: a unique envelope reference number associated with the document; a unique document reference number; a document page number; and/or coordinates of the location of the signature on the page of the document.

The method may further comprise storing at least one of: the document; a time-date stamp indicative of a time and/or date on which the entity generated the authorisation data; an entity label indicative of the identity of the entity; an entity location indicative of the location at which the entity generated the authorisation data; a unique envelope reference number associated with the document; and/or a unique document reference number.

Preferably, the unique document reference number comprises a document checksum generated based on the document, or a hash of the document.

At least some of the plurality of document authorisation requests may comprise an authorisation progress indicator that is indicative of at least some of the authorisation data received from previous entities in the signature-approval chain. The authorisation progress indicator may comprise an image applied to the document.

The method may further comprising obtaining an entity identifier for at least one of the plurality of entities. Digitally communicating a document authorisation request to an entity may comprises determining a communications address using at least the entity identifier, and digitally communicating the document approval request to the entity using the identified communications address. Digitally communicating a document authorisation request to an entity may additionally, or alternatively, comprise determining the required authorisation for the entity using the identified communications address.

At least one of the plurality of entities may be a group entity that comprises two or more sub-entities, and wherein digitally communicating a document authorisation request to the group entity may comprise digitally communicating a document authorisation request to each of the two or more sub-entities, wherein the document authorisation request comprises the document and a request for the required authorisation corresponding to the group entity. Authorisation data complying with the required authorisation corresponding to the group entity may be required from any one of the two or more sub-entities (for example, any of the two or more sub-entities may supply authorisation data complying with the required authorisation for the group entity).

At least one of the document authorisation requests may further comprise a request for information from the respective entity of the plurality of entities, and wherein generating an executed document comprising the document and at least some of the received authorisation data takes place after receiving from each of the plurality of entities authorisation data complying with the respective requested authorisation and any requested information (for example, if the document authorisation request for one of the plurality of entities further comprises a request for information, the document may be executed after receiving the authorisation data from that entity that complies with the requested information and the required authorisation for that entity, and after receiving authorisation data from the other entities that complies with the required authorisation for those other entities).

Preferably, the required authorisation corresponding to each of the plurality of entities comprises a requirement for a signature from the entity and/or a requirement for approval from the entity.

The required authorisation corresponding to at least one of the plurality of entities may comprise a requirement for only an approval from the entity, and the required authorisation corresponding to at least one of the other entities in the plurality of entities may comprise a requirement for a signature from the entity. For example, only an approval may be required for some, but not all, of the plurality of entities, and for the rest of the plurality of entities, a signature (or a signature and approval) may be required.

Preferably, the authorisation data received from each entity comprises at least one of: a signature from the entity and/or an approval from the entity.

The authorisation data received from each of the plurality of entities may further comprise at least one of: a time-date stamp indicative of a time and/or date on which the entity generated the authorisation data; an entity label indicative of the identity of the entity; and/or an entity location indicative of the location at which the entity generated the authorisation data.

In a second aspect, there is provided an electronic device (such as a document execution system comprising a processor(s)) configured to perform the method disclosed above.

In a third aspect of the present disclosure, there is provided a computer program configured to perform the method disclosed above when executed on a processor of an electronic device.

### Drawings

Aspects of the present disclosure are described, by way of example only, with reference to the following drawings in which:
Figure 1 shows a representation of an example system 100 in accordance with an aspect of the present disclosure;
Figure 2 shows a representation of the steps of a method of digitally executing a document in accordance with an aspect of the present disclosure; and
Figure 3 shows a representation of an example signature-approval chain formed by a plurality of entities 130 in the system 100 of Figure 1.

### Detailed description

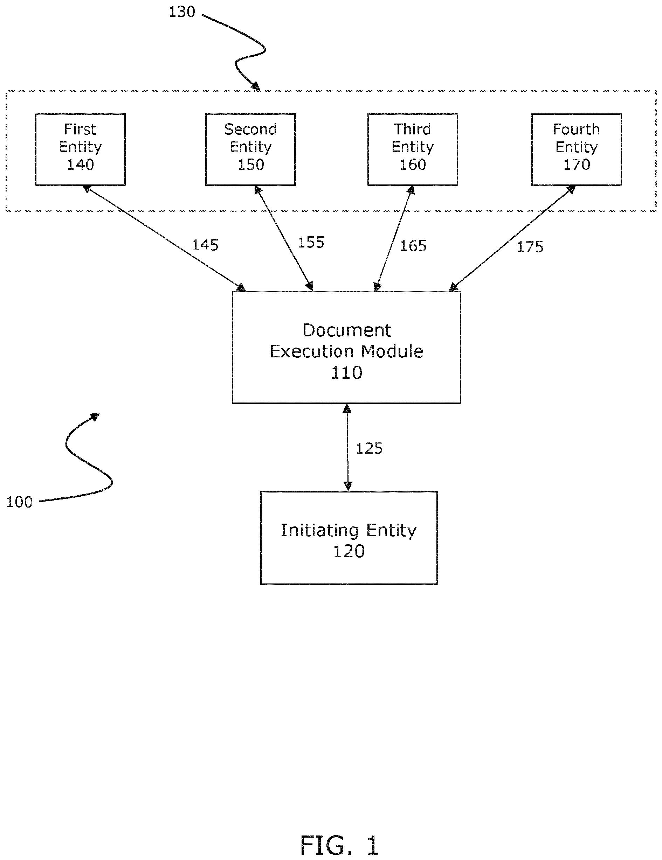

The present disclosure relates to a digital document execution process, whereby a plurality of entities digitally receive a document to be executed and provide their authorisation data (an approval and/or signature). After all of the authorisation data has been received, the executed document is generated comprising at least some of the authorisation data (for example, comprising the signature(s) received from the entities). By executing the document after all of the authorisation data has been received, an executed document comes into existence only after all necessary approvals and/or signatures have been obtained, without any partially executed document ever existing. Thus, the digital document execution process achieves an outcome that improves the security and reliability of the executed document and that is not possible using traditional document execution processes. Figure 1 shows an example schematic representation of a system 100 in accordance with an aspect of the present disclosure. The system 100 comprises a document execution module 110, an initiating entity 120 and a plurality of entities 130 comprising a first entity 140, a second entity 150, a third entity 160 and a fourth entity 170. The initiating entity 120 communicates with the document execution module 110 via an interface 125. The first entity 140 communicates with the document execution module 110 via a first interface 145, the second entity 150 communicates with the document execution module 110 via a second interface 155, the third entity 160 communicates with the document execution module 110 via a third interface 165 and the fourth entity 170 communicates with the document execution module 110 via a fourth interface 175.

The document execution module 110 may be any form of electronic device that is configured to perform the functionality described below. For example, it may be a server, such as a webserver, or a desktop computer, or a laptop computer, etc, or may be a part of server, such as a part of a webserver, or a part of a desktop computer, or a part of a laptop computer, etc. As such, the document execution module 110 may comprise one or more processors, such as one or more microprocessors, and one or more memory modules, such as one or more volatile memory modules (for example, RAM) and/or one or more non-volatile memory modules (such as ROM, Flash memory, solid-state memory, hard-disk drive, etc) suitable for storing a computer program configured to perform the functionality described below when executed on the one or more processors. Alternatively, the document execution module 110 may comprise any form of configurable logic, such as an FPGA, that is configured to perform the functionality described below.

It will be appreciated that whilst the document execution module 110 is represented as a single unit, it may alternatively be implemented as a plurality of interconnected or networked units that are co-located or located in different geographical places. For example, the document execution module 110 may comprise a plurality of interconnected units that are configured to together perform the functionality described below. As such, the document execution module 110 may be referred to as a document execution system comprising one or more units or modules that are together configured to perform the functionality described below.

Each of the initiating entity 120 and the plurality of entities 130 may comprise a respective person, or user, and any suitable electronic device that is configured to perform the functionality described below. For example, each of the initiating entity 120 and the plurality of entities 130 may comprise a desktop computer, or a laptop computer, or a tablet computer, or a smart phone, etc. As such, each of the initiating entity 120 and the plurality of entities 130 may comprise one or more processors, such as one or more microprocessors, and one or more memory modules, such as one or more volatile memory modules (for example, RAM) and/or one or more non-volatile memory modules (such as ROM, Flash memory, solid-state memory, hard-disk drive, etc) suitable for storing a computer program configured to perform the functionality described below when executed on the processor. Alternatively, one or more of the initiating entity 120 and the plurality of entities 130 may comprise any form of configurable logic, such as an FPGA, that is configured to perform the functionality described below.

The electronic device that is part of each of the initiating entity 120 and the plurality of entities 130 is configured to communicate with the document execution module 110 via the interfaces 125, 145, 155, 165 and 175 using any suitable network communications standards, protocols and architectures. For example, communications may be carried out in accordance with internet protocols, such as TCP/IP. The interfaces 125, 145, 155, 165 and 175 may comprise wired (for example, Ethernet) and/or wireless (for example, Wi-Fi, WiMAX, GSM, GPRS, EDGE, UMTS, LTE, 5G, etc) interfaces.

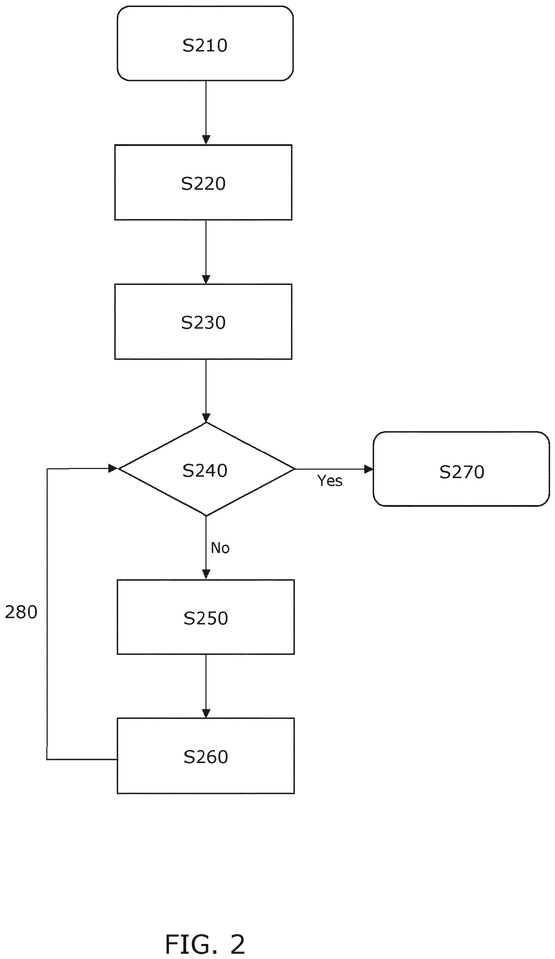

Figure 2 shows a representation of the steps of an example method of digitally executing a document in accordance with an aspect of the present disclosure.

In Step S210, the initiating entity 120 initiates the document execution process. This may be done in a variety of different ways. For example, the initiating entity 120 may communicate a document(s) to be executed to the document execution module 110 via interface 125. This communication may be performed by any suitable technique, for example by email, by data upload, etc.

Alternatively, the initiating entity 120 may select one or more documents that are stored on the document execution module 110 (for example, in one or more memory modules in the document execution module 110), or at a location that is separate from, but accessible to, the document execution module 110 (for example, in an external database). In this example, a collection of standard or previously used documents may be stored, wherein the initiating entity 120 chooses one or more of those documents and optionally edits the details of the selected documents (for example, so that particular individuals are identified on the document(s)). This process may be performed, for example, by the initiating entity 120 accessing a website that presents a list of the stored documents to the initiating entity 120. This may involve the initiating entity 120 logging into the website so that documents that are relevant to the initiating entity 120 (such as documents that are relevant to the particular company that the initiating entity 120 is part of) are accessible to the initiating entity 120. The initiating entity 120 can then select and optionally edit the documents that they would like to have executed. In one particular implementation, multiple documents may be bundled together in virtual envelopes, such that the initiating entity 120 can simply select a standard envelope of documents and optionally enter any details that are to be included in the documents within the envelope. Each virtual envelope may have an associated unique envelope reference number, which can be used during the signature process to identify the particular envelope (as explained in more detail later).

One example use case may be the execution of a collection of documents relating to the start of an employment of a person at a company. The initiating entity 120 may be associated with the company, or some other organisation, such as an employment agency, and the document execution module 110 may obtain a collection of documents relating to the employment, either by receiving them from the initiating entity 120 (for example, because the initiating entity 120 uploads them to the document execution module 110), or by the initiating entity 120 selecting the documents from a list of stored documents and the document execution module 110 then retrieving those documents from memory.

As part of the initiation in Step S210, the initiating entity 120 may communicate to the document execution module 110 which entities must authorise the document(s). In this regard, the initiating entity 120 may identify each of the entities with a communications address for each entity and/or an entity identifier for each entity (examples of possible types of communications addresses and entity identifiers are given below). Optionally, the initiating entity 120 may also communicate the required authorisation (for example, a requirement for one or more signatures and/or one or more approvals) for each entity that is to authorise the document.

In an alternative, for a document execution process that is initiated by a particular initiating entity 120 (for example, an initiating entity 120 that is part of a particular company) and/or for a particular document(s) (for example, particular types of documents, such as employment documents) there may be a particular plurality of entities that should authorise the document(s). In this case, the document execution module 110 may identify the plurality entities 130 based on the identity of the initiating entity 120 (which it may determine from the initiating entity's login to the website, or from its IP address, or from further data communicated from the initiating entity 120 to the document execution module 110, etc) and/or the type of document(s) that is to be executed. This method of identifying the plurality of entities 130 may be particularly effective where the initiating entity 120 selects a standard envelope of documents, wherein as part of that envelope there is an associated particular plurality of entities that should authorise the documents.

In a further alternative, the document execution module 110 may identify the plurality of entities 130 using both of the techniques above. For example, the initiating entity 120 may communicate to the document execution module 110 an entity identifier and/or communications address (and optionally a required authorisation) for one or more of the entities in the plurality of entities 130. The remaining entities in the plurality of entities 130 may be identified by the document execution module 110 by virtue of the identity of the initiating entity 120 and/or the type of the document(s) and/or by any other suitable means. In the particular use case identified above, the first entity 140 may be the new employee and the second to fourth entities 150, 160, 170 may be associated with the employer. In this case, the initiating entity 120 may communicate to the document execution module 110 a communications address for the new employee and a required authorisation for them (such as, a signature is required). The second to fourth entities 150, 160, 170 may be determined by the document execution module 110 because for employment documents that are initiated by that particular initiating entity 120, the second entity 150, third entity 160 and fourth entity 170 must also provide their authorisation.

Optionally, where two or more documents are to be signed and approved by the plurality of entities 130, some entities in the plurality of entities 130 may be required to sign some of the documents and only approve the remaining documents, and some of the other entities in the plurality of entities 130 may be required to sign others of the documents and only approve the remaining documents. Therefore, different documents in the collection of two or more documents may have different required authorisations for particular entities in the plurality of entities 130.

The communications address for each of the plurality of entities 130 may be any form of address using which the document execution module 110 may digitally communicate the document(s) to the entity. For example, it may comprise an email address, and/or a website user identifier using which the document execution module 110 may store the document(s) in a secure part of the website that is accessible to the entity when they login. For example, the document may be stored in a secure part of the website so that when the entity logs into the website, they are presented with a document(s) for their authorisation (optionally, a notification of pending document(s) may also be communicated to the entity, for example by email). Optionally, the communications address may further comprise a mobile telephone number, which may be used as part of a two-factor authentication process for the entity.

Table 1 below shows an example set of information that the document execution module 110 may have obtained in accordance with any of the techniques above to identify the plurality of entities:

**Table 1**

| | **Communications address** | **Entity identifier** | **Required authorisation** |
|---|---|---|---|
| First entity 140 | Website user: ABC123 | - | Signature |
| | Email address: jane@example.com | | |
| Second entity 150 | - | Team X Project Manager | - |
| Third entity 160 | - | HR Director | Approval |
| Fourth entity 170 | - | CEO | - |

It will be appreciated that this information may be structured or arranged in any suitable way, and that the tabular form of Table 1 is used in this disclosure merely for the sake of clarity of understanding.

In this example, the document execution module 110 has obtained only entity identifiers for the second entity 150 and the fourth entity 170 and has obtained only an entity identifier and required authorisation for the third entity 160. The way in which a communications address and, as necessary, a required authorisation may be determined by the document execution module 110 for these entities is explained in more detail below.

A detailed explanation of the process of digitally communicating the document(s) to each of the plurality of entities 130 and the entities then authorising the document(s) is also given below. However, a brief explanation of a signature-approval chain is set out first.

The plurality of entities 130 may make up a signature-approval chain. A signature-approval chain represents an order in which the document should be authorised by the plurality of entities 130. The document execution module 110 may identify a signature-approval chain as part of the above described process of identifying the plurality of entities 130.

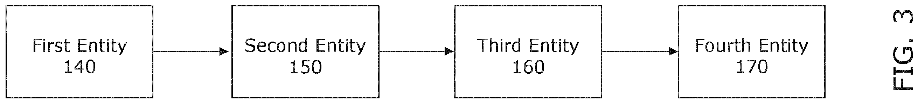

Figure 3 shows an example representation of a signature-approval chain. In this example, the first entity 140 is first in the chain. Once the document(s) has been authorised by the first entity 140 in accordance with the required authorisation for that entity, the document(s) will be communicated to the second entity 150 for authorisation. Once the document(s) has been authorised by the second entity 150 in accordance with the required authorisation for that entity, the document(s) will be communicated to the third entity 160 for authorisation. Once the document(s) has been authorised by the third entity 160 in accordance with the required authorisation for that entity, the document(s) will be communicated to the fourth entity 170 for authorisation. Signature-approval chains may be used to enforce a particular hierarchy of authorisation, for example so that more senior entities authorise the document(s) only after more junior entities have made their authorisations. It should be noted that, in contrast to the approval-chain and signature-chain identified in the 'background' section above, each entity in the signature-approval chain may be required to approve and/or sign the document. Thus, a single chain of entities can be used to both approve and sign the document, thereby improving communications efficiency compared with traditional separate approval chains and signature chains.

Returning to Figure 1, in Step S220, the document execution module 110 digitally communicates a document authorisation request to the first entity 140. The document authorisation request comprises the document(s) to the executed and a request for the required authorisation that corresponds with the first entity 140.

Optionally, the authorisation request may also comprise a request for further information from the first entities 140 (for example, personal information such as postal address and/or National Insurance number and/or date of birth, etc, or any other suitable information that may need to be added to the document(s)).

In the example given in Table 1 above, the communications address is part of the information that the document execution module 110 has obtained for identifying the plurality of entities 130, and comprises a website user ID: ABC123 and an email address: iane@example.com. The required authorisation for the first entity 140 is also part of the information that the document execution module 110 has obtained and is "signature". Therefore, in this example, the document execution module 110 may determine the communications address and required authorisation directly from the obtained information identifying the plurality of entities 130, and then digitally communicate the document authorisation request to the first entity 140 based on that information. For example, the document execution module 110 may digitally communicate the document authorisation request to the first entity 140 by storing the document authorisation request in a secure area of the website accessible to user: ABC123 and sending a notification email to jane@example.com to notify them that they have a pending authorisation request.

In Step S230, the first entity 140 communicates authorisation data to the document execution module 110 via the interface 145. This step may first include the first entity 140 logging into their secure area of the website operated by the document execution module 110, after which they may retrieve their document(s) for authorisation. The authorisation data communicated from the first entity 140 to the document execution module 110 may comprise an approval of the document and/or a signature of the first entity 140, as required to comply with the required authorisation for the first entity 140. The authorisation data may also comprise any further information that was requested as part of the authorisation request. The authorisation data may be communicated to the document execution module 110 in any suitable way. For example, it may be emailed to the document execution module 110, or it may be uploaded to the website. For example, where the document authorisation request is communicated to the first entity 140 by the first entity 140 logging into the secure website, the authorisation data may then be communicated to the document execution module 110 by the first entity 140 uploading it to the secure website.

Where the authorisation data comprises a signature, the signature may take any suitable form. For example, it may be an image of a hand drawn signature, and/or it may be a digital signature (in accordance with any suitable encryption standards). Where the authorisation data comprises an approval, the approval may take any suitable form. For example, an approval may be indicated by ticking or selecting an 'approval' box presented on the secure website, etc.

The approval data should comply with the required authorisation. One way of ensuring this is to present on the website the opportunity to upload only authorisation data that complies with the required authorisation. For example, if only a signature is required, the website may present the first entity 140 with the opportunity to enter a signature and allow the authorisation data to be submitted only after the signature has been entered. Likewise, if only approval is required, the website may present the first entity 140 with the opportunity to indicate approval and allow the authorisation data to be submitted only after approval has been indicated.

After receiving authorisation data from the first entity 140 that complies with the requested authorisation, in Step S240 the document execution module 110 may determine whether the signature-approval chain has been completed. If it has not been completed, the method proceeds to Step S250. If it has been completed, the method proceeds to Step S270.

In Step S250, the document execution module 110 digitally communicates a document authorisation request to the next entity in the signature-approval chain. Where a plurality of documents are to be approved and executed, the document authorisation request communicated to the next entity in the signature-approval chain may comprise the same documents as communicated to the previous entity in the signature-approval chain, or different documents. In this way, optionally, certain documents may be communicated to certain entities in the plurality of entities 130, and others may be hidden from some entities in the plurality of entities 130.

In the example described above, the next entity in the signature-approval chain is the second entity 150. Digitally communicating the document authorisation request to the second entity 150 may be performed analogously to that described above in respect of the first entity 140.

However, in the example represented in Table 1, the document execution module 110 only has an entity identifier "Team X Project Manager" for the second entity 150 and does not have a communications address or a required authorisation for the second entity 150. Where one or both of the communications address and/or required authorisation are missing, the document execution module 110 may determine the communications address and/or required authorisation using the entity identifier.

**Table 2 is representative of an example database that may be used to determine the communications address and/or required authorisation:**

| **Entity identifier** | **Communications address** | **Required authorisation** |
|---|---|---|
| Team X Project Manager | Website user: DEF234 | Signature |
| | Email address: | |
| | bob@example.com | |
| CTO | Website user: MNB999 | Approval |
| HR Director | Website user: IOP789 | Approval |
| | Website user: LKJ098 | |
| CEO | Website user: YUI567 | Signature |
| | Email address: | |
| | mary@example.com | |
| COO | Website user: JDM123 | Approval |
| | Email address: | |
| | tom@example.com | |

It will be appreciated that this information may be structured or arranged in any suitable way, and that the tabular form of Table 2 is used in this disclosure merely for the sake of clarity of understanding.

It can be readily appreciated that with, for example, a database lookup, the communications address and/or required authorisation can be determined using the entity identifier.

Determining the communications address and/or required authorisation using an entity identifier may be useful to help ensure that the document authorisation request goes to the correct person. For example, Table 1 may be part of a database of members of the employer company. Certain documents relating to that company may always need to be authorised by people in particular roles in the company, for example by the Team X Project Manager, the HR Director and the CEO. However, the people in those roles may change from time to time. By determining the communications address using an entity identifier, it can be ensured that the document authorisation request will go to the person that is currently occupying that role in the company. The communications address and/or required authorisation may therefore be changed dynamically as the document(s) progresses around the signature-approval chain. Thus, it is possible to record a general rule with the document execution module 110 that particular documents and/or documents for a particular company are to be authorised by a particular set of entity identifiers (for example, by a particular set of 'roles' within the company), without needing to worry about changes in company personnel in the future. Consequently, efficiency may be improved. Security may also be improved as the correct people will have sight of and authorise the document(s), rather than the document being sent to a person who was previously required to authorise documents, but no longer has that role. Also, if a decision is made to change the required authorisation for a particular entity, this can be performed efficiently with a single change to the database.

Optionally, if a communications address and/or required authorisation cannot be found for an entity identifier (for example, because the communications address and/or required authorisation field in the database is blank for a particular entity identifier, or because the communications address lists a non-functioning address, such as an obsolete website user or email address), the document execution module 110 may be configured to contact an administrator and/or the initiating entity 120 (for example, by email, or any other suitable means of communication) to notify them that the signature-approval chain is broken. The administrator and/or initiating entity 120 may then take action to fix the problem, for example by adding a communications address and/or required authorisation for the particular entity identifier.

Furthermore, sometimes, it may take a long time to obtain the authorisation data of all of the entities, for example for large signature-approval chains and/or complex documents. In such cases a document authorisation request may be sent to the final entity in the signature-approval chain a long time after the document execution process was initiated. During that time period, the person occupying the role of the final entity may have changed. By determining the communications address and/or required authorisation for an entity using an identity identifier at the time that a document authorisation request is to be communicated to the entity, it may be ensured that regardless of how long it has taken to obtain authorisation data from earlier entities in the signature-approval chain, the document authorisation requests are always sent to an up-to-date communications address and with a request for the correct required authorisation.

In Step S260, authorisation data complying with the requested authorisation is communicated to the document execution module 110 (in this iteration of the loop 280, in step S260 authorisation data complying with the required authorisation for the second entity 150 is communicated from the second entity 150 to the document execution module 110).

The method then returns to Step S240 where again it is determined whether the signature-approval chain has been completed. In this example, since authorisation data has only been received from the first entity 140 and the second entity 150, the method will carry out the steps of loop 280 twice more, once in respect of the third entity 160 and then again in respect of the fourth entity 170. In this way, it can be seen that document approval requests can be sequentially digitally communicated to each respective entity in the signature-approval chain in turn after receiving authorisation data from the previous entity in the signature-approval chain in compliance with the required authorisation for the previous entity.

It should be noted that in Table 2, for the entity identifier "HR director", two different website user IDs are identified for the communications address: "IOP789" and "LKJ098". In this instance, the third entity 160 (the "HR director") may be seen as a "group entity" comprising two "sub-entities". In this case, the document authorisation request may be communicated to both of the sub-entities, wherein authorisation data complying with the requested authorisation corresponding to the group entity can be supplied by either of the two sub-entities. This may be particularly useful where two or more different people may provide an authorisation (for example, either a particular person or their agent/assistant may supply the authorisation data, or any of two or more people performing the same role in a company, such as any one of two or more HR administrators, or project managers, or finance administrators, etc may supply the authorisation data). It will be appreciated that whilst in this example the group entity comprises only two sub-entities, the group entity may alternatively comprise any number of sub-entities (two or more sub-entities). Any one or more of the entities in the plurality of entities 130 may be a group entity.

Alternatively, a group entity may be an entity that comprises two or more entity identifiers (for example, "CTO" and "CTO Personal Assistant"), each of which is a sub-entity. Each sub-entity (i.e., each entity identifier) may then have a corresponding one or more communications address.

Optionally, the authorisation requests communicated in Step S250 may comprise an authorisation progress indicator that is indicative of at least some of the authorisation data received from previous entities in the signature-approval chain. The authorisation progress indicator may thus enable an entity to determine how far through the authorisation process the document has progressed and optionally which entities have already supplied their authorisation data. The authorisation progress indicator may take a number of different forms, for example a list of the previous entities that have supplied their signature and/or approval, and/or an image applied to the document, for example an image applied to a signature space on the document corresponding to a previous entity that has supplied a signature (for example, an image of a stamp "Signed" or "Approval Pending" or "Signed Awaiting Approval" applied to the signature space for that previous entity, meaning that that previous entity has supplied their signature but final approval of the document is still pending, or an overlay on the signature space on the document for that previous entity of a partially obscured image of a signature supplied by a previous entity, etc. In any event, even where the authorisation progress indicator takes the form of an image applied to the document, it will be appreciated that the authorisation progress indicator will be different from any signatures supplied by any previous entities in the signature-approval chain and therefore will not cause the document to be partially or wholly executed. The document will remain entirely unexecuted up until Step S270 (explained below), and may comprise one or more images that act as an authorisation progress indicator but are different from the signatures that are required for the document to be executed.

Optionally, the authorisation data from any one or more of the plurality of entities 130 may further comprise a time-date stamp indicative of a time and/or date on which the entity generated the authorisation data and/or an entity label indicative of the identity of the entity sending the authorisation data to the document execution module 110 (for example, any one or more of an IP address of the entity, a MAC address of the entity, user login credentials, or any suitable unique identifier of the entity) and/or an entity location indicative of the location of the entity sending the authorisation data to the document execution module 110 (for example, an IP address of the entity, a MAC address of the entity, GPS coordinates of the entity's location, etc). This further information in the authorisation data may be stored by the document execution module 110 for auditing and/or security purposes and may be included as part of the signature applied to the executed document, as explained below.

When in Step S240 it is determined that the signature-approval chain has been completed, the method proceeds to Step S270. In Step S270, the executed document is generated by the document execution module 110. Optionally, where one or more authorisation requests sent to the plurality of entities 130 comprised a request for further information, before executing the document(s) the document execution module 110 may also check that all of the requested information has been correctly supplied by the relevant entities in the plurality of entities 130. If it has, then the document may be executed as explained below. If not, the document execution module 110 may abort the entire process, or may contact the relevant entity (or entities) to again request the information, or may perform some other suitable predetermined action.

Furthermore, the document execution module 110 may be configured as part of Step S270 to check that any further requirements for execution of the document(s) have been completed before the document is executed. For example, one or more of the entities 130, or some other entity, may be need to perform some other action before the document(s) is executed. By way of example, if the document(s) relate to employment of a person, it may be necessary for an entity to confirm that an original copy of the person's passport and/or work permit has been checked in person before the document(s) is executed, etc.

The document may be executed by applying the signatures received from the plurality of entities 130 to the document (i.e., applying at least some of the authorisation data received from all of the entities 130, since some of the authorisation data received from the plurality of entities 130 may comprise only an approval). Optionally, the executed document may be communicated to some or all of the plurality of entities 130 and/or to the initiating entity 120 (for example, by storing it in the entities' secure areas of the website and/or by emailing it to them).

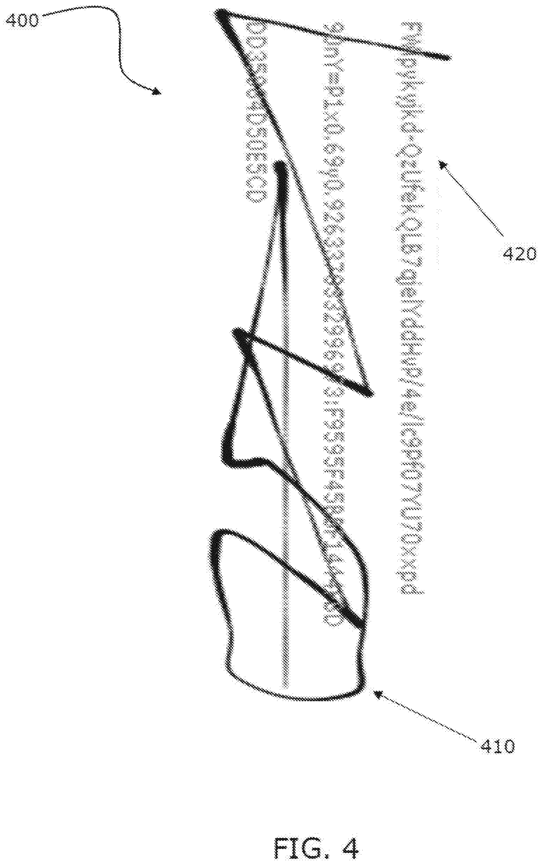

Figure 4 shows an example of a signature 400 that may be applied to the executed document. Each of the signatures that are applied to the executed document may take this form.

The signature 400 comprises a signature image 410 (which is an image of a handwritten signature, in any suitable image format) supplied by the signing entity, overlaying signature data 420. The signature data 420 may comprise any one or more of: a digital signature; a unique envelope reference number for the document; a document page number; coordinates of the location of the signature on the page; and/or a document checksum.

For example, the signature data 420 represented in Figure 4 is as follows:
FWlpykyjkd-QzUfekQLB7qjelYddHvP/4e/Ic9Pf07YU70xxpd90nY=P1x0.69y0.926337833299697 3:F9595F45BBF144416DDD35954D50E5CD
where
Digital signature: FWIpykyjkd-QzUfekQLB7qjelYddHvP/4e/Ic9Pf07YU70xxpd90nY Document page number: P1
Signature coordinates: x0.69 y0.9263378332996973
Document checksum: F9595F45BBF144416DDD35954D50E5CD

The document execution module 120 may generate the digital signature based on any one or more of: the entity label indicative of the identity of the signing entity (for example, a user name of the signing entity); the time-date stamp indicative of the date and/or time that the authorisation data was generated by the signing entity, or provided by the signing entity; and/or an entity location indicative of the location at which the entity generated the authorisation data (for example, the IP address from which the signing entity supplied their authorisation data and/or GPS coordinates of the signing entity and/or a MAC address of the signing entity, etc). The digital signature may be generated using any suitable digital signature/encryption technique, such that the digital signature can only be reproduced by using the same digital signature/encryption technique on the same combination of information. By creating this digital signature and including it as part of the signature 400, an irrefutable link can be created between the signature 400 applied to the document and audit data stored by the document execution module 120 (for example, document execution module's stored records of user name, IP address, date and/or time, etc) so that in the event of a dispute, audit details of the signatory can be securely proved. This further improves the security of the executed document and the authorisation process.

The unique envelope reference number (where relevant), document checksum and document page number may ensure that the signature 400 cannot be copied to any other pages or documents, thereby improving the security and integrity of the executed document and the signature 400.

The document checksum may be generated based on the unexecuted document using any standard checksum process (for example, using an md5 checksum process). The document checksum may operate as a unique document reference number, since each different document should always generate a different document checksum owing to the characteristics of checksums. Optionally, in addition to including this information in the signature data 420, the document checksum may also be printed on each page of the document, so that the signature 400 and the document are even further tied together. Furthermore, where the document is part of an envelope, the unique envelope reference number (or an encrypted version of it), may also be included on each page of the document, to further assist in uniquely identifying the document.

The document execution module 120 may store a copy of unexecuted documents and their corresponding checksums, so that in the event of a dispute regarding the potential alteration of a document after execution, the unexecuted document can be retrieved and a test checksum can be carried out on the stored document, using the same checksum process/algorithm that was used to generate the checksum that appears as part of the signature 400 and that is included on the executed document. That test checksum can then be compared with the stored checksum and the checksum on the executed document and/or the checksum included as part of the signature 400 to help resolve the dispute. If the test checksum is the same as the stored checksum and the checksum(s) on the executed document, then the executed document is the same as the original unexecuted document. If, on the other hand, the test checksum is different to the stored checksum and/or the checksum(s) in the executed document, there is likely to have been some form of unauthorised modification to the executed document.

Whilst the above described the use of a document checksum, it will be appreciated that the document checksum may alternatively be any other type of unique document reference number that is generated based at least in part on the document itself (for example, a hash of the document, etc).

By executing the document only after the necessary authorisation data has been received from all of the plurality entities 130, a partially authorised document (for example, one that has received some, but not all, of the necessary signatures, or one that has received all of the necessary signatures, but not all necessary approvals) is never generated or available. Thus, the security and reliability of the document and the document execution process may be improved. Achieving this level of reliability and security has not previously been possible since up until now, signatures have been applied directly to the document, such that as the document progresses through the signature-approval chain, it gradually gains more signatures and is in a partially executed state right up until the final signature. Thus, implementation of the above disclosed digital document execution process results in an outcome that is not possible from traditional document execution techniques and achieves technical benefits of improved security and reliability.

Whilst in the above described process the plurality of entities 130 form a signature-approval chain, in an alternative there may be no signature-approval chain. In that instance, the document may be communicated to each of the plurality of entities 130 in any order, or to some or all of the plurality of entities 130 at the same time. Thus, since the executed document is only generated after all necessary approvals and signatures have been obtained, the approvals and signatures may be obtained in any order (for example, all required signatures for the document may be obtained before all required approvals are obtained, but the executed document still only executed after all necessary approvals and signatures have been obtained). Thus, whilst previous processes may have required an approval-chain to be completed first and then a separate signature-chain completed second, the digital execution process described herein makes it possible to have a single approval-signature chain, thereby significantly improving the efficiency of the processes.

Indeed, a further technical benefit of the present disclosure is that because the executed document is only generated after all required authorisation data has been received from all of the plurality of entities 130, there is no requirement to serially pass a single document from entity to entity for authorisation in a particular order, which may be time consuming and inefficient. Instead, it is possible to send the document to two or more of the plurality of entities 130 at the same time, such that it may be authorised in parallel, thereby improving speed and efficiency of document execution. Again, this has not been previously possible using traditional document execution techniques, since to send copies of a document to multiple entities at the same time would result in multiple partially executed documents, with no single fully executed document at the end of the process (instead, there would be a plurality of documents, each with a signature of a respective one of the plurality of entities 130). In an implementation of the present disclosure where the document authorisation requests are communicated to all of the plurality of entities at the same time, in Step S220 the document authorisation requests may be sent to all of the plurality of entities 130. Step S240 may then determine whether or not authorisation data has been received from all of the plurality of entities 130 and progress to Step S270 when it has. As such, in this alternative, Steps S250 and S260 may not be required.

The skilled person will readily appreciate that various alterations or modifications may be made to the above described aspects of the disclosure without departing from the scope of the disclosure. For example, the plurality of entities 130 represented in Figure 1 comprises four entities. However, the plurality of entities 130 may comprise any number of entities equal to or greater than two, for example it may comprise two entities, or three entities, or five entities, or ten entities, or 15 entities, etc, etc.

Furthermore, whilst in Figure 1 and the accompanying description the initiating entity 120 is not one of the plurality of entities 130, in an alternative implementation the plurality of entities may comprise the initiating entity 120. For example, the initiating entity 120 may initiate the document execution process and may also be one of the entities that is to authorise the document.

The interfaces 125, 145, 155, 165 and 175 are all represented in Figure 1 as direct connections between the entities and document execution module 110. However, one or more of the interfaces 125, 145, 155, 165 and 175 may comprise one or more intermediate entities or modules, for example routers, etc.

Whilst required authorisations of approval and/or signature are described herein, where an approval and signature is required from an entity, the authorisation data supplied by that entity may comprise a separate approval and signature, or may simply comprise a signature which also acts as an implicit approval.

Optionally, as part of the above described process, each time the document execution module 110 receives authorisation data from an entity, it may check that none of the information in, or relating to, the document(s) has been altered in an unacceptable way. For example, this may be particularly relevant where an authorisation request to an entity comprises a request for information, such that the document execution module 110 may check that information included in the authorisation data complies with a predetermined requirement or rule (for example, if the information relates to a figure or numbers, such as a salary for employment, it falls within an predetermined range of numbers, or if the information is a National Insurance number, that it's length and character types are those of National Insurance numbers, etc) and/or that no other data has unallowably been altered (for example, if a salary has been set, that that salary has not be altered part way through the approval-signature chain, such that the salary approved and/or signed by earlier entities has not been changed later on). If this check is not passed, the document execution module 110 may be configured to abort the current process and start a new one on the basis of the new information.

The functionality of the entities and document execution module 110 described above may be implemented by software, hardware or a combination of software and hardware. The functionality of the document execution module 110 may be implemented by at least one computer program, or software program or module, comprising computer readable code, which when executed on at least one processor of an electronic device, performs the functionality described above. For example, it may be implemented by one computer program to be executed on one electronic device, or it may be implemented by two or more computer programs (each computer program being configured to perform a different part of the functionality of the document execution module 110 described above) to be executed on two or more interconnected electronic devices (which may be co-located or located in different geographical places). The computer program(s) may be stored on any suitable computer readable medium/media, for example a non-transitory computer-readable medium/media, such as read-only memory, random access memory, CD-ROM(s), DVD(s), Blue-ray(s), magnetic tape(s), hard disk drive(s), solid state drive(s) and optical drive(s). The computer-readable medium/media may be distributed over network-coupled computer systems so that the computer readable instructions are stored and executed in a distributed way.

## Claims

1. A system (100) comprising:
a document execution module (110); and
a plurality of entities (140, 150, 160, 170) each communicatively coupled to the document execution module with a respective communications interface (145, 155, 165, 175), wherein the plurality of entities together form a signature-approval chain;
wherein the document execution module is configured to:
digitally communicate to a first entity (140) of the plurality of entities a first document authorisation request comprising a document and a request for a required authorisation corresponding to the first entity of the plurality of entities;
receive from the first entity first authorisation data;
if the first authorisation data complies with the required authorisation for the first entity, digitally communicate to a second entity (150) of the plurality of entities a second document authorisation request comprising the document and a request for a required authorisation corresponding to the second entity of the plurality of entities;
receive from the second entity second authorisation data;
if the second authorisation data complies with the required authorisation data for the second entity, sequentially digitally communicate a respective document approval communication to each remaining entity in the signature-approval chain in turn after receiving authorisation data from a previous entity in the signature-approval chain complying with the required authorisation for the previous entity in the signature-approval chain; and
only after receiving from each of the plurality of entities authorisation data complying with the respective requested authorisation, generate an executed document comprising the document and at least some of the received authorisation data, wherein
the required authorisation for at least one of the plurality of entities consists of a requirement for an approval from the entity, and wherein
the required authorisation for at least one other of the plurality of entities comprises a requirement for a signature from the entity, and wherein
generating the executed document comprises applying the one or more signatures received from the at least one other of the plurality of entities such that the one or more signatures are applied to the document only at the time of generating the executed document.

2. The system of claim 1, wherein the required authorisation for at least the final entity in the signature-approval chain consists of a requirement of an approval from the entity.

3. The system of any preceding claim, wherein the document execution module is further configured to:
obtain an identifier for at least one of the plurality of entities.

4. The system of claim 3, wherein digitally communicating a document authorisation request to an entity of the plurality of entities comprises:
determining a communications address using at least the identifier; and
digitally communicating the document approval request to the entity using the determined communications address.

5. The system of any preceding claim, wherein the authorisation data received from each entity comprises at least one of:
a signature;
an approval.

6. The system of claim 5, wherein the authorisation data received from each of the plurality of entities further comprises at least one of:
a time-date stamp indicative of a time and/or date on which the entity generated the authorisation data;
a label indicative of the identity of the entity;
a location indicative of the location at which the entity generated the authorisation data.

7. The system of any preceding claim, wherein the document execution module is further configured to digitally communicate the executed document to at least some of the plurality of entities.

8. A document execution module (110) configured to:
digitally communicate to a first entity (140) of a plurality of entities (140, 150, 160, 170) a first document authorisation request comprising a document and a request for a required authorisation corresponding to the first entity, wherein the plurality of entities together form a signature-approval chain;
receive from the first entity first authorisation data;
if the first authorisation data complies with the required authorisation for the first entity, digitally communicate to a second entity (150) of the plurality of entities a second document authorisation request comprising the document and a request for a required authorisation corresponding to the second entity;
receive from the second entity second authorisation data;
if the second authorisation data complies with the required authorisation data for the second entity, sequentially digitally communicate a respective document approval communication to each remaining entity in the signature-approval chain in turn after receiving authorisation data from a previous entity in the signature approval-chain complying with the required authorisation for the previous entity in the signature-approval chain; and
only after receiving from each of the plurality of entities authorisation data complying with the respective requested authorisation, generate an executed document comprising the document and at least some of the received authorisation data, wherein
the required authorisation for at least one of the plurality of entities consists of a requirement for an approval, and wherein
the required authorisation for at least one other of the plurality of entities comprises a requirement for a signature, and wherein
generating the executed document comprises applying the one or more signatures received from the at least one other of the plurality of entities such that the one or more signatures are applied to the document only at the time of generating the executed document.

9. The document execution module of claim 8, wherein the required authorisation for at least the final entity in the signature-approval chain consists of a requirement of an approval from the entity.

10. The document execution module of claim 8 or claim 9, wherein the authorisation data received from each entity comprises at least one of:
a signature;
an approval.

11. The document execution module of claim 10, wherein the authorisation data received from each of the plurality of entities further comprises at least one of:
a time-date stamp indicative of a time and/or date on which the entities generated the authorisation data;
a label indicative of the identity of the entity;
a location indicative of the location at which the entity generated the authorisation data.

12. A computer implemented method for digitally executing a document, the method comprising:
digitally communicating to a first entity of a plurality of entities a first document authorisation request comprising a document and a request for a required authorisation corresponding to the first entity, wherein the plurality of entities together form a signature-approval chain;
if first authorisation data received from the first entity complies with the required authorisation for the first entity, digitally communicate to a second entity of the plurality of entities a second document authorisation request comprising the document and a request for a required authorisation corresponding to the second entity;
if second authorisation data received from the second entity complies with the required authorisation data for the second entity, sequentially digitally communicate a respective document approval communication to each remaining entity in the signature-approval chain in turn after receiving authorisation data from a previous entity in the signature-approval chain complying with the required authorisation for the previous entity in the signature-approval chain; and
only after receiving from each of the plurality of entities authorisation data complying with the respective requested authorisation, generate an executed document comprising the document and at least some of the received authorisation data, wherein
the required authorisation for at least one of the plurality of entities consists of a requirement for an approval, and wherein
the required authorisation for at least one other of the plurality of entities comprises a requirement for a signature, and wherein
generating the executed document comprises applying the one or more signatures received from the at least one other of the plurality of entities such that the one or more signatures are applied to the document only at the time of generating the executed document.

13. A computer program configured to perform, when executed on at least one processor of an electronic device, the method of claim 12.

## Patentansprüche

1. System (100), das Folgendes umfasst:
ein Dokumentenausführungsmodul (110) und
mehrere Einheiten (140, 150, 160, 170), die jeweils mit einer jeweiligen Kommunikationsschnittstelle (145, 155, 165, 175) an das Dokumentenausführungsmodul kommunikationstechnisch gekoppelt sind, wobei die mehreren Einheiten gemeinsam eine Signaturbestätigungskette bilden; wobei
das Dokumentenausführungsmodul konfiguriert ist zum:
digitalen Kommunizieren zu einer ersten Einheit (140) der mehreren Einheiten einer ersten Dokumentenermächtigungsanforderung, die ein Dokument und eine Anforderung einer erforderlichen Ermächtigung, die der ersten Einheit der mehreren Einheiten entspricht, umfasst,
Empfangen von der ersten Einheit erster Ermächtigungsdaten, dann, wenn die ersten Ermächtigungsdaten die erforderliche Ermächtigung für die erste Einheit erfüllen, digitalen Kommunizieren zu einer zweiten Einheit (150) der mehreren Einheiten einer zweiten Dokumentenermächtigungsanforderung, die das Dokument und eine Anforderung einer erforderlichen Ermächtigung, die der zweiten Einheit der mehreren Einheiten entspricht, umfasst,
Empfangen von der zweiten Einheit zweiter Ermächtigungsdaten, dann, wenn die zweiten Ermächtigungsdaten die erforderlichen Ermächtigungsdaten für die zweite Einheit erfüllen, sequenziellen digitalen Kommunizieren einer jeweiligen Dokumentengenehmigungskommunikation zu jeder verbleibenden Einheit in der Signaturbestätigungskette wiederum nach dem Empfangen von Ermächtigungsdaten von einer vorhergehenden Einheit in der Signaturbestätigungskette, die die erforderliche Ermächtigung für die vorhergehende Einheit in der Signaturbestätigungskette erfüllen, und
lediglich nach dem Empfangen von Ermächtigungsdaten, die die jeweilige angeforderte Ermächtigung erfüllen, von jeder der mehreren Einheiten Erzeugen eines ausgeführten Dokuments, das das Dokument und mindestens gewisse der empfangenen Ermächtigungsdaten umfasst, wobei
die erforderliche Ermächtigung für mindestens eine der mehreren Einheiten aus einer Anforderung einer Genehmigung von der Einheit besteht,
die erforderliche Ermächtigung für mindestens eine weitere der mehreren Einheiten eine Anforderung einer Signatur von der Einheit umfasst und
das Erzeugen des ausgeführten Dokuments ein Anwenden der einen oder der mehreren Signaturen, die von der mindestens einen weiteren der mehreren Einheiten empfangen wurden, umfasst, derart, dass die eine oder die mehreren Signaturen lediglich während des Erzeugens des ausgeführten Dokuments auf das Dokument angewendet werden.

2. System nach Anspruch 1, wobei die erforderliche Ermächtigung mindestens für die endgültige Einheit in der Signaturbestätigungskette aus einer Anforderung einer Genehmigung von der Einheit besteht.

3. System nach einem vorhergehenden Anspruch, wobei das Dokumentenausführungsmodul ferner konfiguriert ist zum:
Erhalten einer Kennung für mindestens eine der mehreren Einheiten.

4. System nach Anspruch 3, wobei das digitale Kommunizieren einer Dokumentenermächtigungsanforderung zu einer Einheit der mehreren Einheiten Folgendes umfasst:
Bestimmen einer Kommunikationsadresse unter Verwendung mindestens der Kennung und
digitales Kommunizieren der Dokumentengenehmigungsanforderung zur Einheit unter Verwendung der bestimmten Kommunikationsadresse.

5. System nach einem vorhergehenden Anspruch, wobei die Ermächtigungsdaten, die von jeder Einheit empfangen werden, Folgendes umfassen:
eine Signatur und/oder
eine Genehmigung.

6. System nach Anspruch 5, wobei die Ermächtigungsdaten, die von jeder der mehreren Einheiten empfangen werden, ferner Folgendes umfassen:
einen Zeit-/Datumsstempel, der eine Zeit und/oder ein Datum angibt, zu der bzw. dem die Einheit die Ermächtigungsdaten erzeugt hat; und/oder
ein Etikett, das die Identität der Einheit angibt, und/oder
einen Ort, der den Ort angibt, bei dem die Einheit die Ermächtigungsdaten erzeugt hat.

7. System nach einem vorhergehenden Anspruch, wobei das Dokumentenausführungsmodul ferner konfiguriert ist, das ausgeführte Dokument mindestens zu gewissen der mehreren Einheiten digital zu kommunizieren.

8. Dokumentenausführungsmodul (110), das konfiguriert ist zum:
digitalen Kommunizieren zu einer ersten Einheit (140) von mehreren Einheiten (140, 150, 160, 170) einer ersten Dokumentenermächtigungsanforderung, die ein Dokument und eine Anforderung einer erforderlichen Ermächtigung, die der ersten Einheit entspricht, umfasst, wobei die mehreren Einheiten gemeinsam eine Signaturbestätigungskette bilden;
Empfangen von der ersten Einheit erster Ermächtigungsdaten, dann, wenn die ersten Ermächtigungsdaten die erforderliche Ermächtigung für die erste Einheit erfüllen, digitalen Kommunizieren zu einer zweiten Einheit (150) der mehreren Einheiten einer zweiten Dokumentenermächtigungsanforderung, die das Dokument und eine Anforderung einer erforderlichen Ermächtigung, die der zweiten Einheit entspricht, umfasst,
Empfangen von der zweiten Einheit zweiter Ermächtigungsdaten, dann, wenn die zweiten Ermächtigungsdaten die erforderlichen Ermächtigungsdaten für die zweite Einheit erfüllen, sequenziellen digitalen Kommunizieren einer jeweiligen Dokumentengenehmigungskommunikation zu jeder verbleibenden Einheit in der Signaturbestätigungskette wiederum nach dem Empfangen von Ermächtigungsdaten von einer vorhergehenden Einheit in der Signaturbestätigungskette, die die erforderliche Ermächtigung für die vorhergehende Einheit in der Signaturbestätigungskette erfüllen, und
lediglich nach dem Empfangen von Ermächtigungsdaten, die die jeweilige angeforderte Ermächtigung erfüllen, von jeder der mehreren Einheiten Erzeugen eines ausgeführten Dokuments, das das Dokument und mindestens einige der empfangenen Ermächtigungsdaten umfasst, wobei
die erforderliche Ermächtigung für mindestens eine der mehreren Einheiten aus einer Anforderung einer Genehmigung besteht,
die erforderliche Ermächtigung für mindestens eine weitere der mehreren Einheiten eine Anforderung einer Signatur umfasst und
das Erzeugen des ausgeführten Dokuments ein Anwenden der einen oder der mehreren Signaturen, die von der mindestens einen weiteren der mehreren Einheiten empfangen wurden, umfasst, derart dass die eine oder die mehreren Signaturen lediglich während des Erzeugens des ausgeführten Dokuments auf das Dokument angewendet werden.

9. Dokumentenausführungsmodul nach Anspruch 8, wobei die erforderliche Ermächtigung für mindestens die endgültige Einheit in der Signaturbestätigungskette aus einer Anforderung einer Genehmigung von der Einheit besteht.

10. Dokumentenausführungsmodul nach Anspruch 8 oder Anspruch 9, wobei die Ermächtigungsdaten, die von jeder Einheit empfangen werden, Folgendes umfassen:
eine Signatur und/oder
eine Genehmigung.

11. Dokumentenausführungsmodul nach Anspruch 10, wobei die Ermächtigungsdaten, die von jeder der mehreren Einheiten empfangen werden, ferner Folgendes umfassen:
einen Zeit-/Datumsstempel, der eine Zeit und/oder ein Datum angibt, zu der bzw. dem die Einheiten die Ermächtigungsdaten erzeugt hat; und/oder
ein Etikett, das die Identität der Einheit angibt, und/oder
einen Ort, der den Ort angibt, bei dem die Einheit die Ermächtigungsdaten erzeugt hat.

12. Computerimplementiertes Verfahren zum digitalen Ausführen eines Dokuments, wobei das Verfahren Folgendes umfasst:
digitales Kommunizieren zu einer ersten Einheit von mehreren Einheiten einer ersten Dokumentenermächtigungsanforderung, die ein Dokument und eine Anforderung einer erforderlichen Ermächtigung, die der ersten Einheit entspricht, umfasst, wobei die mehreren Einheiten gemeinsam eine Signaturbestätigungskette bilden;
dann, wenn erste Ermächtigungsdaten, die von der ersten Einheit empfangen wurden, die erforderliche Ermächtigung für die erste Einheit erfüllen, digitales Kommunizieren zu einer zweiten Einheit der mehreren Einheiten einer zweiten Dokumentenermächtigungsanforderung, die das Dokument und eine Anforderung einer erforderlichen Ermächtigung, die der zweiten Einheit entspricht, umfasst,
dann, wenn zweite Ermächtigungsdaten, die von der zweiten Einheit empfangen wurden, die erforderlichen Ermächtigungsdaten für die zweite Einheit erfüllen, sequenzielles digitales Kommunizieren einer jeweiligen Dokumentengenehmigungskommunikation zu jeder verbleibenden Einheit in der Signaturbestätigungskette wiederum nach dem Empfangen von Ermächtigungsdaten von einer vorhergehenden Einheit in der Signaturbestätigungskette, die die erforderliche Ermächtigung für die vorhergehende Einheit in der Signaturbestätigungskette erfüllen, und
lediglich nach dem Empfangen von Ermächtigungsdaten, die die jeweilige angeforderte Ermächtigung erfüllen, von jeder der mehreren Einheiten Erzeugen eines ausgeführten Dokuments, das das Dokument und mindestens einige der empfangenen Ermächtigungsdaten umfasst, wobei
die erforderliche Ermächtigung für mindestens eine der mehreren Einheiten aus einer Anforderung einer Genehmigung besteht,
die erforderliche Ermächtigung für mindestens eine weitere der mehreren Einheiten eine Anforderung einer Signatur umfasst und
das Erzeugen des ausgeführten Dokuments ein Anwenden der einen oder der mehreren Signaturen, die von der mindestens einen weiteren der mehreren Einheiten empfangen wurden, umfasst, derart dass die eine oder die mehreren Signaturen lediglich während des Erzeugens des ausgeführten Dokuments auf das Dokument angewendet werden.

13. Computerprogramm, das konfiguriert ist, wenn es in mindestens einem Prozessor einer elektronischen Vorrichtung ausgeführt wird, das Verfahren nach Anspruch 12 durchzuführen.

## Revendications

1. Système (100) comprenant :
un module d'exécution de document (110) ; et
une pluralité d'entités (140, 150, 160, 170), chacune couplée en communication au module d'exécution de document avec une interface de communication respective (145, 155, 165, 175), la pluralité d'entités formant ensemble une chaîne de signature-approbation ;
dans lequel le module d'exécution de document est configuré pour :
communiquer numériquement à une première entité (140) de la pluralité d'entités une première demande d'autorisation de document comprenant un document et une demande d'autorisation requise correspondant à la première entité de la pluralité d'entités ;
recevoir de la première entité des premières données d'autorisation ;
si les premières données d'autorisation sont conformes à l'autorisation requise pour la première entité, communiquer numériquement à une deuxième entité (150) de la pluralité d'entités une deuxième demande d'autorisation de document comprenant le document et une demande d'autorisation requise correspondant à la deuxième entité de la pluralité d'entités ;
recevoir de la deuxième entité des deuxièmes données d'autorisation ;
si les deuxièmes données d'autorisation sont conformes aux données d'autorisation requises pour la deuxième entité, communiquer séquentiellement numériquement une communication respective d'approbation de document à chaque entité restante dans la chaîne de signature-approbation, tour à tour après avoir reçu des données d'autorisation d'une entité précédente dans la chaîne de signature-approbation se conformer à l'autorisation requise pour l'entité précédente dans la chaîne de signature-approbation ; et
seulement après avoir reçu de chacune de la pluralité d'entités des données d'autorisation conformes à l'autorisation respective demandée, générer un document signé comprenant le document et au moins certaines des données d'autorisation reçues, dans lequel
l'autorisation requise pour au moins une de la pluralité d'entités consiste en une exigence d'approbation de la part de l'entité, et
l'autorisation requise pour au moins une autre de la pluralité d'entités comprend une exigence de signature de la part de l'entité, et dans lequel
la génération du document signé comprend l'application de la ou des signatures reçues à partir de l'au moins une autre de la pluralité d'entités de telle sorte que la ou les signatures soient appliquées au document uniquement au moment de la génération du document signé.

2. Système selon la revendication 1, dans lequel l'autorisation requise pour au moins l'entité finale dans la chaîne signature-approbation consiste en une exigence d'une approbation de la part de l'entité.

3. Système selon l'une quelconque des revendications précédentes, dans lequel le module d'exécution de document est en outre configuré pour :
obtenir un identifiant pour au moins une de la pluralité d'entités.

4. Système selon la revendication 3, dans lequel communiquer numériquement une demande d'autorisation de document à une entité de la pluralité d'entités comprend l'étape consistant à :
déterminer une adresse de communication à l'aide d'au moins l'identifiant ; et
communiquer numériquement la demande d'approbation de document à l'entité à l'aide de l'adresse de communication déterminée.

5. Système selon l'une quelconque des revendications précédentes, dans lequel les données d'autorisation reçues de chaque entité comprennent au moins l'un des éléments suivants :
une signature ;
une approbation.

6. Système selon la revendication 5, dans lequel les données d'autorisation reçues de chacune de la pluralité d'entités comprennent en outre au moins l'un des éléments suivants :
un horodatage indiquant une heure et/ou une date à laquelle l'entité a généré les données d'autorisation ;
une étiquette indiquant l'identité de l'entité ;
un emplacement indicatif de l'emplacement auquel l'entité a généré les données d'autorisation.

7. Système selon l'une quelconque des revendications précédentes, dans lequel le module d'exécution de document est en outre configuré pour communiquer numériquement le document signé à au moins certaines de la pluralité d'entités.

8. Un module d'exécution de document (110) configuré pour :
communiquer numériquement à une première entité (140) parmi une pluralité d'entités (140, 150, 160, 170) une première demande d'autorisation de document comprenant un document et une demande d'autorisation requise correspondant à la première entité, la pluralité d'entités ensemble former une chaîne de signature-approbation ;
recevoir de la première entité des premières données d'autorisation ;
si les premières données d'autorisation sont conformes à l'autorisation requise pour la première entité, communiquer numériquement à une deuxième entité (150) de la pluralité d'entités une deuxième demande d'autorisation de document comprenant le document et une demande d'autorisation requise correspondant à la deuxième entité ;
recevoir de la deuxième entité des deuxièmes données d'autorisation ;
si les deuxièmes données d'autorisation sont conformes aux données d'autorisation requises pour la deuxième entité, communiquer séquentiellement numériquement une communication respective d'approbation de document à chaque entité restante dans la chaîne de signature-approbation, tour à tour après avoir reçu des données d'autorisation d'une entité précédente dans la chaîne de signature-approbation qui se conforme à l'autorisation requise pour l'entité précédente dans la chaîne de signature-approbation ; et
seulement après avoir reçu de chacune de la pluralité d'entités des données d'autorisation conformes à l'autorisation demandée respective, générer un document signé comprenant le document et au moins certaines des données d'autorisation reçues, dans lequel
l'autorisation requise pour au moins une de la pluralité d'entités consiste en une exigence d'approbation, et dans lequel
l'autorisation requise pour au moins une autre de la pluralité d'entités comprend une exigence de signature, et dans lequel
la génération du document signé comprend l'application de la ou des signatures reçues à partir de l'au moins une autre de la pluralité d'entités de telle sorte que la ou les signatures soient appliquées au document uniquement au moment de la génération du document signé.

9. Module d'exécution de document selon la revendication 8, dans lequel l'autorisation requise pour au moins l'entité finale dans la chaîne de signature-approbation consiste en une exigence d'une approbation de la part de l'entité.

10. Module d'exécution de documents selon la revendication 8 ou la revendication 9, dans lequel les données d'autorisation reçues de chaque entité comprennent au moins l'un des éléments suivants :
une signature,
une approbation.

11. Module d'exécution de documents selon la revendication 10, dans lequel les données d'autorisation reçues de chacune de la pluralité d'entités comprennent en outre au moins l'un des éléments suivants :
un horodatage indiquant une heure et/ou une date à laquelle les entités ont généré les données d'autorisation ;
une étiquette indiquant l'identité de l'entité ;
un emplacement indicatif de l'emplacement auquel l'entité a généré les données d'autorisation.

12. Procédé mis en oeuvre par ordinateur pour signer numériquement un document, le procédé comprenant les étapes consistant à :
communiquer numériquement à une première entité parmi une pluralité d'entités une première demande d'autorisation de document comprenant un document et une demande d'autorisation requise correspondant à la première entité, la pluralité d'entités formant ensemble une chaîne de signature-approbation ;
si des premières données d'autorisation reçues de la première entité sont conformes à l'autorisation requise pour la première entité, communiquer numériquement à une deuxième entité de la pluralité d'entités une deuxième demande d'autorisation de document comprenant le document et une demande d'autorisation requise correspondant à la deuxième entité ;
si les deuxièmes données d'autorisation reçues de la deuxième entité sont conformes aux données d'autorisation requises pour la deuxième entité, communiquer séquentiellement numériquement une communication respective d'approbation de document à chaque entité restante dans la chaîne de signature-approbation, tour à tour après avoir reçu des données d'autorisation d'une entité précédente dans la chaîne de signature-approbation conforme à l'autorisation requise pour l'entité précédente dans la chaîne de signature-approbation ; et
seulement après avoir reçu de chacune de la pluralité d'entités des données d'autorisation conformes à l'autorisation demandée respective, générer un document signé comprenant le document et au moins certaines des données d'autorisation reçues, dans lequel
l'autorisation requise pour au moins une de la pluralité d'entités consiste en une exigence d'approbation, et dans lequel
l'autorisation requise pour au moins une autre de la pluralité d'entités comprend une exigence de signature, et dans lequel
la génération du document signé comprend l'application de la ou des signatures reçues à partir de l'au moins une autre de la pluralité d'entités de telle sorte que la ou les signatures soient appliquées au document uniquement au moment de la génération du document signé.

13. Programme informatique configuré pour exécuter, lorsqu'il est mis en oeuvre sur au moins un processeur d'un dispositif électronique, le procédé selon la revendication 12.
